# EUROPÄISCHE PATENTSCHRIFT

(11) **EP 4 486 589 B1**
(45) Veröffentlichungstag und Bekanntmachung des Hinweises auf die Patenterteilung: **28.01.2026**
(21) Anmeldenummer: 23709602.9
(22) Anmeldetag: 01.03.2023
(51) Int. Cl.: B60K 11/02, F16D 65/853

(54) **THERMOMANAGEMENTSYSTEM FÜR EIN FAHRZEUG**
THERMAL MANAGEMENT SYSTEM FOR A VEHICLE
SYSTÈME DE GESTION THERMIQUE D?UN VÉHICULE

(30) Priorität: 02.03.2022 DE 102022202122
(43) Veröffentlichungstag der Anmeldung: 08.01.2025
(73) Patentinhaber: Schaeffler Technologies AG & Co. KG, 91074 Herzogenaurach (DE)
(72) Erfinder: ESER, Gerhard, 80687 München (DE); BRETTNER, Sebastian, 80687 München (DE); DILLINGER, Manuel, 80687 München (DE); FEULNER, Markus, 80687 München (DE)
(74) Vertreter: Schaeffler Technologies
(86) Internationale Anmeldenummer: PCT/EP2023/055184
(87) Internationale Veröffentlichungsnummer: WO 2023/166058

(56) Entgegenhaltungen:
- WO-A1-2022/248388
- DE-A1- 10 023 519
- DE-A1- 102020 116 987
- DE-A1- 102021 203 125

## Beschreibung

Die vorliegende Erfindung betrifft ein Thermomanagementsystem für ein Fahrzeug, insbesondere Kraftfahrzeug, wie etwa ein Elektrofahrzeug bzw. ein batterieelektrisches Fahrzeug (BEV), ein Fahrzeug mit einer Verbrennungsmaschine (ICE) mit hohem Elektrifizierungsanteil, beispielsweise ein Hybrid-Elektrofahrzeug oder ein Fahrzeug mit einer Brennstoffzelle (FCEV) bzw. ein Wasserstofffahrzeug.

Derartige Fahrzeuge weisen einen elektrischen Antriebsmotor, eine Batterie und eine Leistungselektronik wie etwa einen Inverter auf. Hierbei wird mittels eines Thermomanagementsystems, welches einen oder mehrere Kühl-/Wärme(mittel)kreisläufe zur Kühlung und/oder Erwärmung und/oder Schmierung des elektrischen Antriebsmotors, zur Kühlung und/oder Erwärmung der Batterie und der Leistungselektronik unter Verwendung eines oder mehrerer Kühl-/Wärmemittel aufweist, sichergestellt, dass die Betriebstemperaturen des elektrischen Antriebsmotors, der Batterie und der Leistungselektronik bzw. des hierzu verwendeten Kühl-/Wärmemittels oder der hierzu verwendeten Kühl-/Wärmemittel innerhalb vorgegebener Temperaturfenster liegen, um Schäden und/oder Leistungseinbußen der entsprechenden gekühlten/erwärmten Komponenten zu verhindern.

Bei dem elektrischen Antriebsmotor und der Leistungselektronik soll beispielsweise die Kühl-/Wärmemitteltemperatur abhängig von der verwendeten Technologie normalerweise 85 °C nicht übersteigen. Das Temperaturfenster zum Betreiben der Batterie, insbesondere deren Batteriezellen, bzw. der Temperatur des Kühl-/Wärmemittels kann beispielsweise zwischen 20 °C und 40 °C liegen, da unter 20 °C der Zellinnenwiderstand groß ist und speziell bei kalten Temperaturen die Stromaufnahme während des Ladens limitiert werden muss, um insbesondere bei Lithium-Ionen-Batterien ein sogenanntes Lithium-Plating (Einlagern von metallischem Lithium) zu verhindern.

Um diese Randbedingungen sicher erfüllen zu können, werden normalerweise die Kühlung und/oder Schmierung zumindest einer Komponente, insbesondere eines Rotors, des elektrischen Antriebsmotor, und die Batteriekühlung unter Verwendung von zwei verschiedenen Kühl-/Wärme(mittel)kreisläufen realisiert. Beide Kühl-/Wärme(mittel)kreisläufe müssen Wärme sowohl aufnehmen als auch wieder abgeben können.

Die Wärme wird bei Verwendung eines ölgekühlten elektrischen Antriebsmotors über einen Wärmeübertrager von dem ersten Kühl-/Wärmemittel/Öl in dem ersten Kühl-/Wärme(mittel)kreislauf zur Kühlung und/oder Schmierung der zumindest einen Komponente des elektrischen Antriebsmotor an das zweite Kühl-/Wärmemittel (Wasser/Glykol-Gemisch) in dem zweiten Kühl-/Wärme(mittel)kreislauf abgegeben. Das Öl dient dabei innerhalb der Antriebseinheit zur Kühlung und Schmierung des elektrischen Antriebsmotors, von Lagern und einem Getriebe, insbesondere Reduktionsgetriebe, zur Kopplung eines Rotors des elektrischen Antriebsmotors mit einer Antriebswelle zum Antrieb eines oder mehrerer Antriebsräder des Fahrzeugs, und wird in dem ersten (separaten) Kühl-/Wärme(mittel)kreislauf geführt.

Meist werden aber die Leistungselektronik und der elektrische Antriebsmotor direkt über das zweite Kühl-/Wärmemittel in dem zweiten Kühl-/Wärme(mittel)kreislauf gekühlt, so dass hier die Wärme auch direkt aufgenommen werden kann. Die Entwärmung des zweiten Kühl-/Wärme(mittel)kreislaufs findet normalerweise über einen Wärmetauscher, insbesondere einen Radiator, an die Umgebungsluft statt. Da der zweite Kühl-/Wärme(mittel)kreislauf zur Kühlung der Batterie eine Temperatur von 40 °C nicht überschreiten soll, reicht meist die Entwärmung über den Radiator nicht aus. In diesem Fall kann über einen weiteren Wärmeübertrager die Wärme von dem zweiten Kühl-/Wärmemittel an ein Kältemittel eines Kältemittelkreislaufs, beispielsweise einer Klimaanlage des Fahrzeugs, abgeführt werden.

Die DE 10 023 519 A1 geht von einem Kühlsystem für Fahrzeuge mit einer Brennkraftmaschine und einem Getriebe aus, wobei das Kühlsystem mindestens einen Lüfter, eine Kühlmittelpumpe, die in Abhängigkeit von einer an mindestens einer Stelle des Kühlsystems gemessenen Temperatur geregelt wird, einen Wärmetauscher, eine Kühlmittelverteilereinrichtung und mehrere Kühlmittelkreislaufe aufweist, und schlägt vor, dass die Drehzahl der Kühlmittelpumpe mit der Leistung der Brennkraftmaschine zunimmt und die Drehzahl des Lüfters der Drehzahl der Kühlmittelpumpe folgt, indem der Lüfter erst bei einer unteren Grenzdrehzahl der Kühlmittelpumpe startet und seine maximale Drehzahl erst erreicht, wenn die Kühlmittelpumpe ihre maximale Drehzahl bereits eine Weile erreicht hat.

Weiterhin offenbart die DE102020116987A1 ein Thermomanagementsystem für ein Fahrzeug, aufweisend einen Kühlmittelkreislauf mit einer Kühlmittelpumpe zum Fördern eines Kühlmittels in dem Kühlmittelkreislauf zur Kühlung einer Bremse des Fahrzeugs, und weiter aufweisend einen Wärmemittelkreislauf mit zumindest einer Wärmemittelpumpe zum Fördern eines Wärmemittels in dem Wärmemittelkreislauf zur Kühlung und/oder Erwärmung einer Komponente eines elektrischen Antriebsmotors des Fahrzeugs.

Eine Aufgabe einer Ausführung der vorliegenden Erfindung ist es, ein verbessertes Thermomanagementsystem für ein Fahrzeug bereitzustellen.

Diese Aufgabe wird durch ein Thermomanagementsystem für ein Fahrzeug mit den Merkmalen des Anspruchs 1 gelöst. Der Anspruch 15 stellt ein Fahrzeug mit einem solchen Thermomanagementsystem unter Schutz.

Nach einem Aspekt der vorliegenden Erfindung weist ein Thermomanagementsystem für ein Fahrzeug, insbesondere für ein Kraftfahrzeug wie etwa ein Elektro-, Hybrid- oder Wasserstofffahrzeug, auf:
einen Kühlmittelkreislauf mit einer Kühlmittelpumpe zum Fördern eines Kühlmittels in dem Kühlmittelkreislauf zur Kühlung einer Bremse, insbesondere Lamellenbremse, des Fahrzeugs,
einen Wärmemittelkreislauf mit zumindest einer Wärmemittelpumpe zum Fördern eines Wärmemittels in dem Wärmemittelkreislauf zur Kühlung und/oder Erwärmung einer Komponente, insbesondere eines Stators, eines elektrischen Antriebsmotors des Fahrzeugs und in einer Weiterbildung einer Batterie und/oder einer Leistungselektronik und/oder eines Ladegeräts und/oder zur Erwärmung eines Innenraums des Fahrzeugs, insbesondere durch einen Wärmetauscher,
einen Wärmeübertrager zum Austausch von Wärme zwischen dem Kühlmittel in dem Kühlmittelkreislauf und dem Wärmemittel in dem Wärmemittelkreislauf,
eine Kopplungs-/Entkopplungseinheit, die dazu eingerichtet ist, in einer Kopplungsstellung eine Drehung eines Rotors des elektrischen Antriebsmotors und eine Drehung zumindest eines Antriebsrads des Fahrzeugs zu koppeln und in einer Entkopplungsstellung die Drehung des Rotors und die Drehung des zumindest einen Antriebsrads zu entkoppeln, und
eine Steuereinheit, die dazu eingerichtet ist, bei einem Stillstand des Fahrzeugs zu veranlassen, dass sich die Kopplungs-/Entkopplungseinheit in der Entkopplungsstellung befindet, den elektrischen Antriebsmotor zu veranlassen, dass der Rotor gedreht wird, und die Bremse zu veranlassen die Drehung des Rotors zu bremsen.

Hierdurch kann in einer Ausführung selbst während des Stillstands des Fahrzeugs die mittels des Kühlmittels von der Bremse aufgenommene bzw. abgeführte Wärme durch den Wärmeübertrager auf das Wärmemittel und von diesem insbesondere auf die Batterie und/oder in den Innenraum des Fahrzeugs übertragen werden. Auf diese Weise kann in einer Ausführung auf ein separates Heizelement wie etwa ein PTC-Heizelement, welches typischerweise in einer Klimaanlage des Fahrzeugs verbaut ist, zur Erwärmung des Innenraums, und/oder ein weiteres separates Heizelement, beispielsweise ebenfalls ein PTC-Heizelement, welches typischerweise zur Temperierung der Batterie verwendet wird, verzichtet werden.

Nach einer Ausführung ist die Bremse zwischen der Kopplungs-/Entkopplungseinheit und dem Rotor angeordnet.

Hierdurch kann in einer Ausführung in einem Fall, in dem sich die Kopplungs-/Entkopplungseinheit in der Entkopplungsstellung befindet und der Rotor gedreht wird, während sich das Fahrzeug in dem Stillstand befindet, die Drehung des Rotors durch die Bremse gebremst werden, und zumindest ein Teil der hierdurch erzeugten Wärme zur Aufheizung des Innenraums und/oder der Batterie verwendet werden.

Nach einer Ausführung ist die Kopplungs-/Entkopplungseinheit zwischen einer Rotorwelle des Rotors und einem Getriebe, insbesondere Reduktionsgetriebe, des Fahrzeugs, oder zwischen dem Getriebe und einem Differential des Fahrzeugs angeordnet.

Hierdurch kann in einer Ausführung in ersterem Fall bei dem Stillstand des Fahrzeugs das Getriebe bzw. eine Drehung einer Komponente des Getriebes von einer Drehung der Rotorwelle entkoppelt werden, während die Drehung der Rotorwelle durch die Bremse gebremst werden, wodurch ein Verschleiß des Getriebes verringert werden kann.

Nach einer Ausführung weist das Thermomanagementsystem ferner zumindest eine Temperaturerfassungseinheit auf, die dazu eingerichtet ist, eine Innenraumtemperatur des Innenraums des Fahrzeugs und/oder eine Batterietemperatur der Batterie zu erfassen, wobei die Steuereinheit dazu eingerichtet ist, bei dem Stillstand des Fahrzeugs zu veranlassen, dass sich die Kopplungs-/Entkopplungseinheit in der Entkopplungsstellung befindet, den elektrischen Antriebsmotor zu veranlassen, dass der Rotor gedreht wird, und die Bremse zu veranlassen die Drehung des Rotors zu bremsen, wenn die Batterietemperatur kleiner als ein vorgegebener Batterietemperaturschwellenwert ist und/oder wenn die Innenraumtemperatur kleiner als ein vorgegebener Innenraumtemperaturschwellenwert ist.

Hierdurch kann in einer Ausführung erreicht werden, dass die Abbremsung der Drehung des Rotors bei dem Stillstand des Fahrzeugs zur Erzeugung der Wärme nur durchgeführt wird, wenn dies erforderlich ist, wodurch der Verschleiß der Bremse reduziert werden kann.

Nach einer Ausführung ist der Kühlmittelkreislauf mit der Kühlmittelpumpe zum Fördern des Kühlmittels in dem Kühlmittelkreislauf zur Kühlung zumindest einer weiteren Bremse, insbesondere weiteren Lamellenbremse, des Fahrzeugs und/oder des Rotors und/oder des Getriebes eingerichtet, wobei die zumindest eine weitere Bremse dazu eingerichtet ist, die Drehung des zumindest einen Antriebsrads zu bremsen, und zwischen der Kopplungs-/Entkopplungseinheit und dem zumindest einen Antriebsrad angeordnet ist.

Hierdurch kann in einer Ausführung die durch das Fahrzeug bei einem Bremsvorgang des Fahrzeugs, um die Geschwindigkeit des Fahrzeugs abzubremsen, durch die Fahrzeugbremsen bewirkte Bremsleistung auf die Bremse und die zumindest eine weitere Bremse aufgeteilt werden, wodurch eine Abnutzung der Bremse und/oder der zumindest einen weiteren Bremse während des Bremsvorgangs reduziert werden kann und die durch die Fahrzeugbremsen bewirkte Gesamtbremsleistung erhöht werden kann.

Nach einer Ausführung weist das Thermomanagementsystem ferner zumindest ein Mehrwegeventil auf, durch welches eine Menge zu der Batterie geförderten Wärmemittels und/oder eine Menge zu der Leistungselektronik geförderten Wärmemittels und/oder eine Menge zu dem Ladegerät geförderten Wärmemittels und/oder eine Menge zu der Komponente des elektrischen Antriebsmotors des Fahrzeugs geförderten Wärmemittels und/oder eine Menge zu dem Wärmetauscher geförderten Wärmemittels einstellbar ist, wobei die Steuereinheit dazu eingerichtet ist, das zumindest eine Mehrwegeventil derart anzusteuern, dass das Wärmemittel zu der Batterie gefördert wird, wenn die Batterietemperatur kleiner als der vorgegebene Batterietemperaturschwellenwert ist, und/oder das zumindest eine Mehrwegeventil derart anzusteuern, dass das Wärmemittel zu dem Wärmetauscher gefördert wird, wenn die Innenraumtemperatur kleiner als der vorgegebene Innenraumtemperaturschwellenwert ist.

Hierdurch kann in einer Ausführung die Batterie, falls die Batterietemperatur unter dem für den sicheren Betrieb der Batterie erforderlichen (unteren) Batterietemperaturschwellenwert liegt, durch Verwendung der auf das Wärmemittel übertragenen Wärme aufgeheizt werden. Zusätzlich oder alternativ kann hierdurch in einer Ausführung der Innenraum des Fahrzeugs, falls die Innenraumtemperatur unter einem vorgegebenen, beispielsweise mittels der Klimaanlage einstellbaren (unteren) Innenraumtemperaturschwellenwert liegt, durch Verwendung der auf das Wärmemittel übertragenen Wärme aufgeheizt werden.

Nach einer Ausführung ist die Steuereinheit dazu eingerichtet, bei einem Bremsvorgang des Fahrzeugs die Bremse und/oder die zumindest eine weitere Bremse anzusteuern, um das Fahrzeug durch Betätigung der Bremse und/oder der zumindest einen weiteren Bremse abzubremsen, wenn die Batterietemperatur kleiner als der vorgegebene Batterietemperaturschwellenwert ist und/oder die Innenraumtemperatur kleiner als der vorgegebene Innenraumtemperaturschwellenwert ist.

Hierbei ist die Steuereinheit vorzugsweise ferner dazu eingerichtet, die Kühlmittelpumpe während des Bremsvorgangs derart anzusteuern, dass diese das Kühlmittel in dem Kühlmittelkreislauf fördert, um die Wärme von der Bremse und/oder der zumindest einen weiteren Bremse und/oder des Rotors des elektrischen Antriebsmotors des Fahrzeugs und/oder des Getriebes des Fahrzeugs auf verbesserte Weise abzuführen, und die zumindest eine Wärmemittelpumpe derart anzusteuern, dass diese das Wärmemittel während des Bremsvorgangs fördert, um eine Übertragung der Wärme von dem Kühlmittel auf das Wärmemittel zu gewährleisten.

Hierbei kann in einer Ausführung die während des Bremsvorgangs in der Bremse und/oder der zumindest einen weiteren Bremse generierte Wärme abgeführt und zur Erwärmung der Batterie und/oder des Innenraums genutzt werden.

Nach einer Ausführung ist der elektrische Antriebsmotor in einem Elektromotormodus, in dem das Fahrzeug angetrieben wird oder sich der elektrische Antriebsmotor in einem Leerlauf befindet, und in einem Generatormodus, in dem Energie durch Rekuperation zurückgewonnen wird und die rekuperierte Energie in die Batterie rückgespeist wird, einstellbar durch die Steuereinheit, betreibbar, und ist die Steuereinheit dazu eingerichtet, bei dem Bremsvorgang des Fahrzeugs die Bremse und/oder die zumindest eine weitere Bremse anzusteuern, um das Fahrzeug durch Betätigung der Bremse und/oder der zumindest einen weiteren Bremse abzubremsen, und den Elektromotormodus des elektrischen Antriebsmotors einzustellen, wenn die Batterietemperatur kleiner als der vorgegebene Batterietemperaturschwellenwert ist und/oder die Innenraumtemperatur kleiner als der vorgegebene Innenraumtemperaturschwellenwert ist.

Hierdurch kann beispielsweise im Falle eines Kaltstarts des Fahrzeugs, wenn die Batterietemperatur und/oder die Innenraumtemperatur niedrig ist, in einer Ausführung im Wesentlichen die gesamte für den Bremsvorgang durch das Fahrzeug aufzuwendende Energie zur Erwärmung der Batterie und/oder des Innenraums genutzt werden.

Nach einer Ausführung ist die zumindest eine Temperaturerfassungseinheit ferner dazu eingerichtet, eine Wärmemitteltemperatur des Wärmemittels zu erfassen, ist die Steuereinheit dazu eingerichtet, eine erforderliche Wärmeleistung zum Erwärmen der Batterie und/oder des Innenraums des Fahrzeugs zu ermitteln, eine Stellung eines Gaspedals des Fahrzeugs zu erfassen, anhand der Stellung des Gaspedals eine Drehmomentanforderung an den elektrischen Antriebsmotor zu bestimmen, die Bremse und/oder die zumindest eine weitere Bremse derart anzusteuern, dass diese einen Bremsvorgang mit einem vorgegebenen, basierend auf der erforderlichen Wärmeleistung berechneten, Bremsmoment durchführt bzw. durchführen, und den elektrischen Antriebsmotor derart anzusteuern, dass dieser ein Drehmoment erzeugt, welches auf der Drehmomentanforderung und dem Bremsmoment basiert, wenn die Wärmemitteltemperatur kleiner als ein vorgegebener Wärmemitteltemperaturschwellenwert ist.

Hierbei kann das basierend auf der erforderlichen Wärmeleistung berechnete Bremsmoment in Abhängigkeit von einer aktuellen Drehzahl eines Antriebsrads des Fahrzeugs berechnet werden, das berechnete Bremsmoment durch die Übersetzung des Getriebes dividiert und mit der anhand der Stellung des Gaspedals bestimmten Drehmomentanforderung des Fahrers zusammenaddiert werden, um das Drehmoment zu erhalten, welches durch den elektrischen Antriebsmotor erzeugt werden soll. Wenn das Fahrzeug die Bremse und mehrere der zumindest einen weiteren Bremse aufweist, kann das berechnete Bremsmoment durch die Anzahl der Bremse(n)/weiteren Bremsen dividiert und das Ergebnis in jeder der Bremsen realisiert werden. Wenn beispielsweise eine der zumindest einen weiteren Bremse an einem Antriebsrad auf der linken Seite des Fahrzeugs und eine andere der zumindest einen weiteren Bremse an einem Antriebsrad der rechten Seite des Fahrzeugs vorgesehen sind, wird das berechnete Bremsmoment in der (einen) Bremse und den beiden weiteren Bremsen zu je einem Drittel realisiert.

Weiterhin kann hierbei die Steuereinheit insbesondere dazu eingerichtet sein, den elektrischen Antriebsmotor derart anzusteuern, dass dieser ein Drehmoment erzeugt, welches gleich der Summe aus der Drehmomentanforderung und dem Bremsmoment ist, wenn die Wärmemitteltemperatur kleiner als ein vorgegebener Wärmemitteltemperaturschwellenwert ist.

Hierdurch kann in einer Ausführung selbst in dem Falle, in dem das Fahrzeug bzw. dessen Geschwindigkeit nicht abgebremst wird, durch das aktive Bremsen mit der Bremse und/oder der zumindest einen weiteren Bremse Wärme von dieser bzw. diesen abgeführt werden und zur Erwärmung der Batterie und/oder des Innenraums genutzt werden.

Nach einer Ausführung ist die Steuereinheit dazu eingerichtet, eine aktuelle Bremsleistung der Bremse und/oder der zumindest einen weiteren Bremse zu ermitteln, und eine Fördermenge des Kühlmittels durch die Kühlmittelpumpe in Abhängigkeit von der aktuellen Bremsleistung der Bremse und/oder der zumindest einen weiteren Bremse einzustellen.

Hierdurch kann in einer Ausführung beispielsweise durch Erhöhung der Fördermenge bei erhöhter Bremsleistung die Wärmeabfuhr durch das Kühlmittel verbessert und gleichzeitig die Bremse und/oder die zumindest eine weitere Bremse vor einer Überhitzung geschützt werden.

Nach einer Ausführung weist das Thermomanagementsystem ferner einen Eingangstemperatursensor, welcher dazu eingerichtet ist, eine Eingangstemperatur des Kühlmittels stromaufwärts der Bremse und/oder der zumindest einen weiteren Bremse zu erfassen, und einen Ausgangstemperatursensor auf, welcher dazu eingerichtet ist, eine Ausgangstemperatur des Kühlmittels stromabwärts der Bremse und/oder der zumindest einen weiteren Bremse zu erfassen, wobei die Steuereinheit dazu eingerichtet ist, wenn eine Differenz zwischen der Ausgangstemperatur und der Eingangstemperatur einen vorgegebenen Differenztemperaturschwellenwert überschreitet, die Fördermenge des Kühlmittels durch die Kühlmittelpumpe in Abhängigkeit von der aktuellen Bremsleistung und einer Differenz zwischen der Differenz zwischen der Ausgangstemperatur und der Eingangstemperatur und dem vorgegebenen Differenztemperaturschwellenwert einzustellen.

Hierdurch kann in einer Ausführung insbesondere die Fördermenge des Kühlmittels erhöht werden, wenn die Differenz zwischen der Ausgangstemperatur und der Eingangstemperatur den vorgegebenen Differenztemperaturschwellenwert überschreitet, um die Überhitzung der Bremse und/oder der zumindest einen weiteren Bremse zu verhindern.

Nach einer Ausführung weist das Thermomanagementsystem ferner einen weiteren Wärmetauscher, insbesondere Radiator, zur Abgabe von Wärme an eine Umgebung des Fahrzeugs auf, wobei durch das zumindest eine Mehrwegeventil eine Menge zu dem weiteren Wärmetauscher geförderten Wärmemittels einstellbar ist, und die Steuereinheit dazu eingerichtet ist, wenn die Wärmemitteltemperatur größer als der vorgegebene Wärmemitteltemperaturschwellenwert ist, das zumindest eine Mehrwegeventil derart anzusteuern, dass das Wärmemittel zu dem weiteren Wärmetauscher gefördert wird, und bei dem Bremsvorgang den Generatormodus des elektrischen Antriebsmotors einzustellen.

Hierdurch kann in einer Ausführung beispielsweise in einem Fall, in dem die Batterie und/oder der Innenraum nicht geheizt werden müssen, die während des Bremsvorgangs in der Bremse und/oder der zumindest einen weiteren Bremse generierte Wärme über den weiteren Wärmetauscher an die Umgebung des Fahrzeugs abgegeben werden.

Des Weiteren kann durch die Einstellung des Generatormodus des elektrischen Antriebsmotors während dem Bremsvorgang bewirkt werden, dass die Bremse und/oder die zumindest eine weitere Bremse für den Bremsvorgang nicht oder nur in geringem Maße betätigt werden muss, da die Bremswirkung des Generatormodus bzw. das Bremsmoment, das durch den Generatormodus hervorgerufen wird, hierfür ausreicht oder zu der Bremswirkung der Bremse und/oder der zumindest einen weiteren Bremse addiert wird, und somit eine weitere Erhöhung der Wärmemitteltemperatur weitestgehend vermieden wird, während gleichzeitig Energie mittels des Generatormodus rückgewonnen werden kann.

Nach einer Ausführung ist die Steuereinheit dazu eingerichtet, die Bremse und/oder die zumindest eine weitere Bremse anzusteuern, um das Fahrzeug durch Betätigung der Bremse und/oder der zumindest einen weiteren Bremse zusätzlich abzubremsen, wenn die Wärmemitteltemperatur größer als der vorgegebene Wärmemitteltemperaturschwellenwert ist und ein für den Bremsvorgang gefordertes Bremsmoment größer als ein durch den Generatormodus während des Bremsvorgangs erzeugbares Bremsmoment ist.

Hierdurch kann in einer Ausführung der Bremsvorgang mit dem erforderlichen Bremsmoment durchgeführt werden, insbesondere auch dann, wenn das für den Bremsvorgang geforderte Bremsmoment durch den Generatormodus nicht erzeugt werden kann oder nicht dauerhaft erzeugt werden kann, wie beispielsweise bei einer längeren Bergabfahrt des Fahrzeugs, da hierdurch der elektrische Antriebsmotor überhitzt werden würde.

Nach einer Ausführung weist das Thermomanagementsystem ferner ein Kühlmittelkreislauf-Mehrwegeventil, durch welches ein Verhältnis zwischen einer zur Kühlung der Bremse und/oder der zumindest einen weiteren Bremse verwendeten Kühlmittelmenge und einer zur Kühlung des Rotors und/oder des Getriebes verwendeten Kühlmittelmenge einstellbar ist, und zumindest eine Temperaturerfassungseinrichtung zur Erfassung einer Temperatur des Rotors und/oder einer Temperatur des Getriebes auf, wobei die Steuereinheit dazu eingerichtet ist, die Fördermenge des Kühlmittels durch die Kühlmittelpumpe zusätzlich in Abhängigkeit von der Temperatur des Rotors und/oder der Temperatur des Getriebes einzustellen, und das Verhältnis zwischen der zur Kühlung der Bremse und/oder der zumindest einen weiteren Bremse verwendeten Kühlmittelmenge und der zur Kühlung des Rotors und/oder des Getriebes verwendeten Kühlmittelmenge basierend auf der Temperatur des Rotors und/oder der Temperatur des Getriebes und der Differenz zwischen der Differenz zwischen der Ausgangstemperatur und der Eingangstemperatur und dem vorgegebenen Differenztemperaturschwellenwert einzustellen.

Hierdurch können in einer Ausführung die für die Kühlung der Bremse und/oder der zumindest einen weiteren Bremse und die für die Kühlung des Rotors und/oder die für die Kühlung des Getriebes verwendeten Kühlmittelmengen/-flüsse individuell bedarfsgerecht eingestellt werden.

Nach einer Ausführung weist das Thermomanagementsystem ferner einen Kühlmitteltemperatursensor, welcher dazu eingerichtet ist, eine Temperatur des Kühlmittels zu erfassen, und zumindest eine Bypassleitung mit zumindest einem Ventil, insbesondere Absperr- oder Drosselventil, auf, wobei die zumindest eine Bypassleitung parallel zu dem Wärmeübertrager und/oder einem Kühlmittelfilter geschaltet ist, und die Steuereinheit dazu eingerichtet ist, das zumindest eine Ventil anzusteuern, um zumindest einen Anteil des Kühlmittels parallel zu dem Wärmeübertrager und/oder parallel zu dem Kühlmittelfilter durch die Bypassleitung zu fördern, wenn die Temperatur des Kühlmittels kleiner als ein vorgegebener Kühlmitteltemperaturschwellenwert ist.

Hierdurch kann in einer Ausführung ein hydraulischer Widerstand für das Kühlmittel reduziert werden, wenn die Temperatur des Kühlmittels kleiner als der vorgegebene Kühlmitteltemperaturschwellenwert ist, und somit die Förderleistung der Kühlmittelpumpe bei gleichem Energieaufwand für die Förderung erhöht werden.

Nach einer Ausführung weist das Thermomanagementsystem ferner auf:
einen Kühlkreislauf mit einem Verdampfer zur Kühlung des Innenraums des Fahrzeugs, einem Kondensator und einem Kompressor zum Fördern eines weiteren Wärmemittels in dem Kühlkreislauf, und
einen weiteren Wärmeübertrager zum Austausch von Wärme zwischen dem Wärmemittel in dem Wärmemittelkreislauf und dem weiteren Wärmemittel in dem Kühlkreislauf.

Hierbei kann der Kühlkreislauf insbesondere durch den Kältekreislauf der Klimaanlage des Fahrzeugs gebildet sein, wobei Wärme von der Batterie über das Wärmemittel und den weiteren Wärmeüberträger an das weitere Wärmemittel übertragen werden kann, um die Batterie zu kühlen, falls die Batterietemperatur größer als ein vorgegebener oberer Batterieschwellenwert ist.

Nach einem anderen Aspekt der Erfindung weist ein Fahrzeug, insbesondere Kraftfahrzeug, ein vorstehend beschriebenes Thermomanagementsystem auf.

Weitere Vorteile und Merkmale ergeben sich aus den Unteransprüchen und den Ausführungsbeispielen. Hierzu zeigt, teilweise schematisiert:
- Fig. 1: ein Fahrzeug mit einem Thermomanagementsystem nach einer Ausführung der Erfindung,
- Fig. 2: ein Thermomanagementsystem nach einer Ausführung der Erfindung,
- Fig. 3: einen Antriebsstrang des Fahrzeugs nach einer Ausführung der Erfindung, und
- Fig. 4: einen Kühlmittelkreislauf eines Thermomanagementsystems nach einer Ausführung der Erfindung.

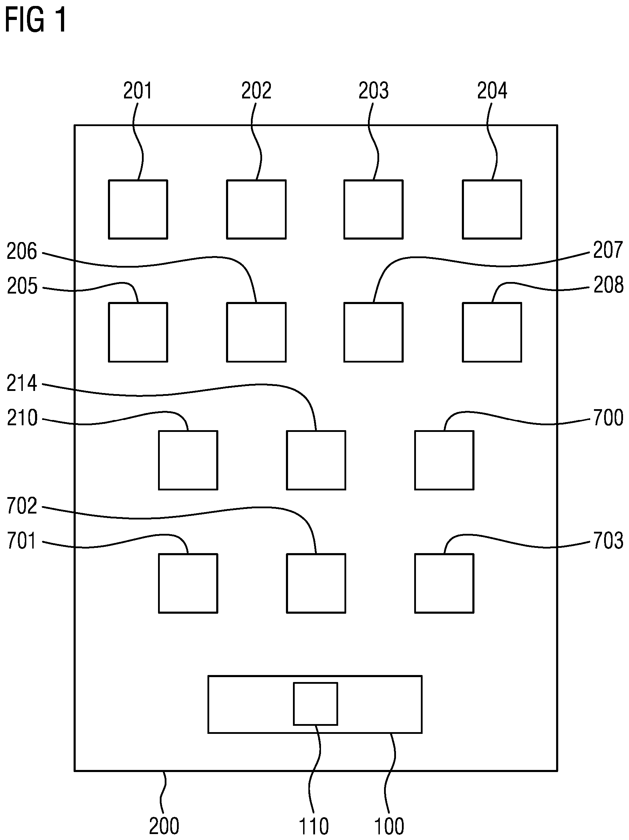

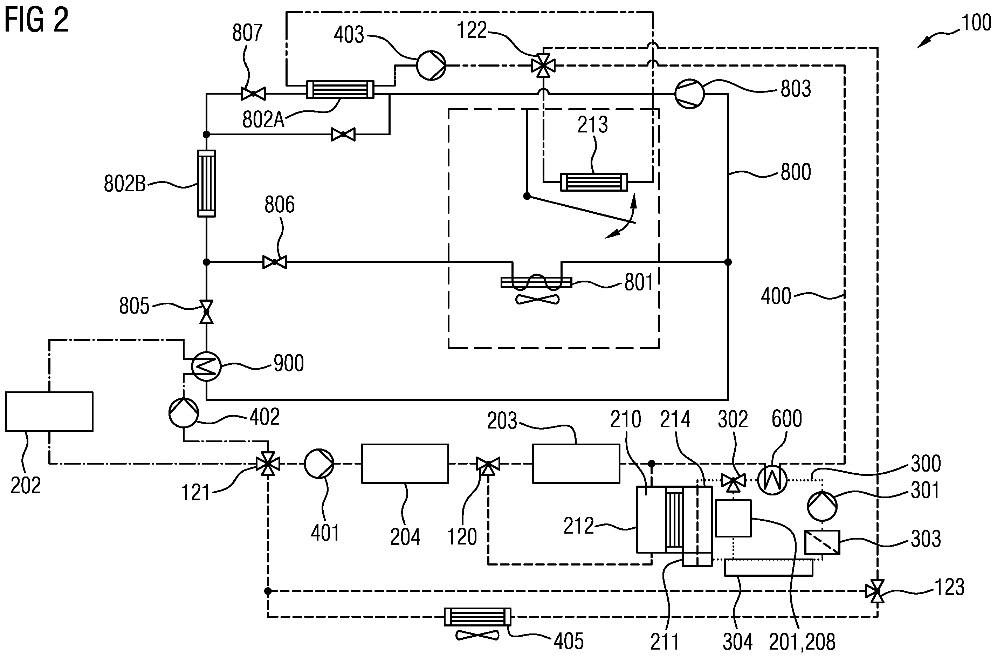

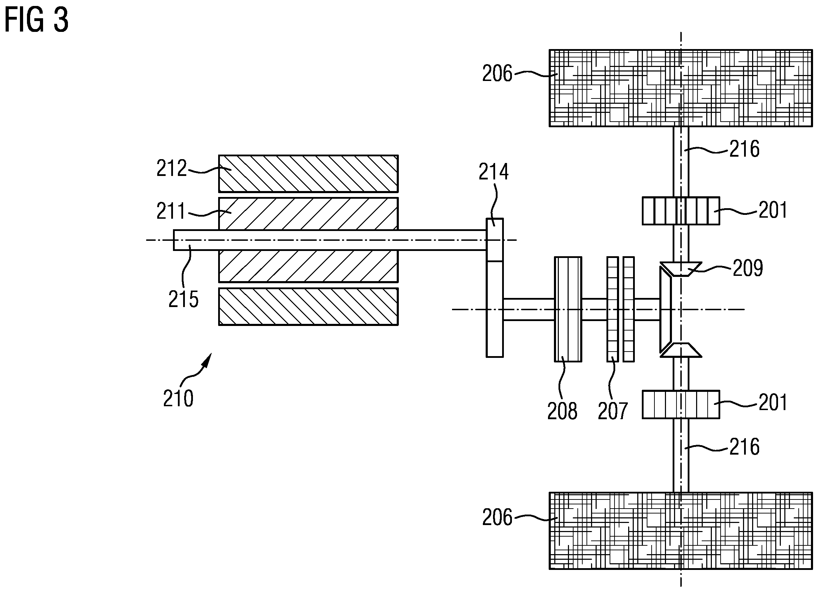

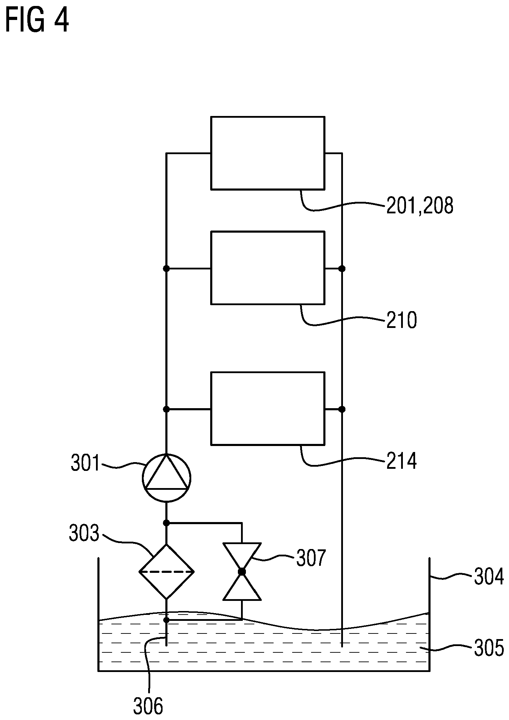

Fig. 1 zeigt ein Fahrzeug mit einem Thermomanagementsystem nach einer Ausführung der Erfindung, Fig. 2 zeigt Details des in Fig. 1 gezeigten Thermomanagementsystems, Fig. 3 zeigt einen Antriebsstrang eines Fahrzeugs gemäß einer Ausführung und Fig. 4 zeigt einen Kühlmittelkreislauf eines Thermomanagementsystems gemäß einer Ausführung der Erfindung.

Das Fahrzeug 200, insbesondere Elektro-, Hybrid- oder Wasserstofffahrzeug, weist ein Thermomanagementsystem 100 mit einer Steuereinheit 110, eine Bremse 208, insbesondere Lamellenbremse, gegebenenfalls zumindest eine weitere Bremse 201, insbesondere Lamellenbremse zum Abbremsen des Fahrzeugs 200 bzw. einer Fortbewegung davon, eine Batterie 202, eine Leistungselektronik 203, insbesondere einen Inverter, ein Ladegerät 204 zum Aufladen der Batterie 202, ein Gaspedal 205, einen elektrischen Antriebsmotor 210 mit einem Rotor 211 und einer Komponente 212, insbesondere einem Stator, ein Getriebe 214, insbesondere Reduktionsgetriebe zur Koppelung des Rotors 211 mit einer oder mehreren mit Antriebsrädern 206 des Fahrzeugs 200 gekoppelten Antriebswelle 216 des Fahrzeugs 200, zumindest eine Temperaturerfassungseinheit 700, einen Eingangstemperatursensor 701, einen Ausgangstemperatursensor 702, und zumindest eine Temperaturerfassungseinrichtung 703 auf.

Das Thermomanagementsystem 100 weist einen Kühlmittelkreislauf 300 mit einer Kühlmittelpumpe 301 zum Fördern eines Kühlmittels, insbesondere Öl, in dem Kühlmittelkreislauf 300 zur Kühlung und/oder Schmierung der Bremse 208 und/oder der zumindest einen weiteren Bremse 201 und/oder des Rotors 211 des elektrischen Antriebsmotors 210 des Fahrzeugs 200 und/oder des Getriebes 214 des Fahrzeugs 200, einem Filter 303, insbesondere Ölfilter zum Filtern des Kühlmittels und einem Sumpf 304, insbesondere Ölsumpf, für das Kühlmittel auf.

Des Weiteren weist das Thermomanagementsystem 100 einen Wärmemittelkreislauf 400 mit zumindest einer Wärmemittelpumpe 401, 402, 403 zum Fördern eines Wärmemittels, insbesondere eines Wasser/Glykol-Gemischs, in dem Wärmemittelkreislauf 400 zur Kühlung und/oder Erwärmung der Batterie 202 und/oder der Leistungselektronik 203 und/oder des Ladegeräts 204 und/oder der Komponente 212 des elektrischen Antriebsmotors 210 des Fahrzeugs 200 und/oder eines Innenraums des Fahrzeugs 200, insbesondere durch einen Wärmetauscher 213, und einen Wärmeübertrager 600 zum Austausch von Wärme zwischen dem Kühlmittel in dem Kühlmittelkreislauf 300 und dem Wärmemittel in dem Wärmemittelkreislauf 400 auf.

In einem insbesondere in Fig. 3 veranschaulichten Antriebsstrang des Fahrzeugs 200 ist eine Kopplungs-/Entkopplungseinheit 207 vorgesehen, die dazu eingerichtet ist, in einer Kopplungsstellung eine Drehung des Rotors 211 des elektrischen Antriebsmotors 210 und eine Drehung zumindest eines Antriebsrads 206 des Fahrzeugs 200, im in Fig. 3 dargestellten Fall zwei Antriebsräder 206 des Fahrzeugs 200, zu koppeln und in einer Entkopplungsstellung die Drehung des Rotors 211 und die Drehung des zumindest einen Antriebsrads 206 zu entkoppeln.

Die Steuereinheit 110 ist dazu eingerichtet, bei einem Stillstand des Fahrzeugs 200, beispielsweise einem vorübergehenden Anhalten des Fahrzeugs 200 an einer Straßenkreuzung oder einer Ampel, zu veranlassen, dass die Kopplungs-/Entkopplungseinheit 207 in die Entkopplungsstellung gebracht wird oder in dieser verbleibt, das heißt zu veranlassen, dass sich die Kopplungs-/Entkopplungseinheit 207 während des Stillstands des Fahrzeugs 200 in der Entkopplungsstellung befindet, den elektrischen Antriebsmotor 210 zu veranlassen, dass der Rotor 211 gedreht wird, und die Bremse 208, welche zumindest dazu eingerichtet ist eine Drehung des Rotors 211 zu bremsen, zu veranlassen die Drehung des Rotors 211 zu bremsen.

Wie in Fig. 3 veranschaulicht ist hierbei die Bremse 208 zwischen der Kopplungs-/Entkopplungseinheit 207 und dem Rotor 211 angeordnet, um den Rotor 211 in der Entkopplungsstellung drehen zu können, ohne dass das zumindest eine Antriebsrad 206 gleichzeitig mitgedreht wird.

Hierbei kann, wie in Fig. 3 gezeigt, in einer Ausführungsform die Kopplungs-/Entkopplungseinheit 207 zwischen dem Getriebe 214 und einem Differential 209 des Fahrzeugs 200 angeordnet sein, oder es kann, in einer nicht gezeigten Ausführungsform, die Kopplungs-/Entkopplungseinheit 207 zwischen einer Rotorwelle 215 des Rotors 211 und dem Getriebe 214 des Fahrzeugs 200 angeordnet sein.

Die zumindest eine Temperaturerfassungseinheit 700 ist dazu eingerichtet, eine Innenraumtemperatur des Innenraums des Fahrzeugs 200 und/oder eine Batterietemperatur der Batterie 202 zu erfassen, wobei die Steuereinheit 110 dazu eingerichtet ist, bei dem Stillstand des Fahrzeugs 200 zu veranlassen, dass sich die Kopplungs-/Entkopplungseinheit 207 in der Entkopplungsstellung befindet, den elektrischen Antriebsmotor 210 zu veranlassen, dass der Rotor 211 gedreht wird, und die Bremse 208 zu veranlassen die Drehung des Rotors 211 zu bremsen, wenn die Batterietemperatur kleiner als ein vorgegebener Batterietemperaturschwellenwert ist und/oder wenn die Innenraumtemperatur kleiner als ein vorgegebener Innenraumtemperaturschwellenwert ist.

Der Kühlmittelkreislauf 300 mit der Kühlmittelpumpe 301 ist ferner zum Fördern des Kühlmittels 305 in dem Kühlmittelkreislauf 300 zur Kühlung der zumindest einen weiteren Bremse 201 und/oder des Rotors 211 und/oder des Getriebes 214 eingerichtet, wobei die zumindest eine weitere Bremse 201 dazu eingerichtet ist, die Drehung des zumindest einen Antriebsrads 206 zu bremsen, und zwischen der Kopplungs-/Entkopplungseinheit 207 und dem zumindest einen Antriebsrad 206, beispielsweise zwischen dem Differential 209 und einer (jeweiligen) Antriebswelle 216 des zumindest einen Antriebsrads 206 angeordnet ist.

Das Thermomanagementsystem 100 weist ferner zumindest ein Mehrwegeventil 120, 121, 122 auf, wobei durch ein Mehrwegeventil 121 eine Menge zu der Batterie 202 geförderten Wärmemittels einstellbar ist, durch ein Mehrwegeventil 120 eine Menge zu der Leistungselektronik 203 geförderten Wärmemittels und/oder eine Menge zu dem Ladegerät 204 geförderten Wärmemittels und eine Menge zu der Komponente 212 des elektrischen Antriebsmotors 210 des Fahrzeugs 200 geförderten Wärmemittels einstellbar ist, und durch ein Mehrwegeventil 122 eine Menge zu dem Wärmetauscher 213 geförderten Wärmemittels einstellbar ist.

Die Steuereinheit 110 ist dazu eingerichtet, das Mehrwegeventil 121 derart anzusteuern, dass das Wärmemittel zu der Batterie 202 gefördert wird, wenn die Batterietemperatur kleiner als der vorgegebene Batterietemperaturschwellenwert ist, und/oder das Mehrwegeventil 122 derart anzusteuern, dass das Wärmemittel zu dem Wärmetauscher 213 gefördert wird, wenn die Innenraumtemperatur kleiner als der vorgegebene Innenraumtemperaturschwellenwert ist.

Hierbei ist die Steuereinheit 110 insbesondere dazu eingerichtet, bei einem Bremsvorgang des Fahrzeugs 200 die Bremse 208 und/oder die zumindest eine weitere Bremse 201 anzusteuern, um das Fahrzeug 200 durch Betätigung der Bremse 201 und/oder der zumindest einen weiteren Bremse 201 abzubremsen, wenn die Batterietemperatur kleiner als der vorgegebene Batterietemperaturschwellenwert ist und/oder die Innenraumtemperatur kleiner als der vorgegebene Innenraumtemperaturschwellenwert ist.

Der elektrische Antriebsmotor 210 ist in einem Elektromotormodus, in dem das Fahrzeug 200 angetrieben wird oder sich der elektrische Antriebsmotor 210 in einem Leerlauf befindet, und in einem Generatormodus, in dem Energie durch Rekuperation zurückgewonnen wird und die rekuperierte Energie in die Batterie 202 rückgespeist wird, einstellbar durch die Steuereinheit 110, betreibbar. Hierbei ist die Steuereinheit 110 dazu eingerichtet, bei dem Bremsvorgang des Fahrzeugs 200 die Bremse 208 und/oder die zumindest eine weitere Bremse 201 anzusteuern, um das Fahrzeug 200 durch Betätigung der Bremse 208 und/oder der zumindest einen weiteren Bremse 201 abzubremsen, und den Elektromotormodus des elektrischen Antriebsmotors 210 einzustellen, wenn die Batterietemperatur kleiner als der vorgegebene Batterietemperaturschwellenwert ist und/oder die Innenraumtemperatur kleiner als der vorgegebene Innenraumtemperaturschwellenwert ist.

Die zumindest eine Temperaturerfassungseinheit 700 ist ferner dazu eingerichtet, eine Wärmemitteltemperatur des Wärmemittels zu erfassen, wobei die Steuereinheit 110 dazu eingerichtet ist, eine erforderliche Wärmeleistung zum Erwärmen der Batterie 202 und/oder des Innenraums des Fahrzeugs 200 zu ermitteln, eine Stellung des Gaspedals 205 des Fahrzeugs 200 zu erfassen, anhand der Stellung des Gaspedals 205 eine Drehmomentanforderung an den elektrischen Antriebsmotor 210 zu bestimmen, die Bremse 208 und/oder die zumindest eine weitere Bremse 201 derart anzusteuern, dass diese einen Bremsvorgang mit einem vorgegebenen, basierend auf der erforderlichen Wärmeleistung berechneten, Bremsmoment durchführt bzw. durchführen, und den elektrischen Antriebsmotor 210 derart anzusteuern, dass dieser ein Drehmoment erzeugt, welches auf der Drehmomentanforderung und dem Bremsmoment basiert, wenn die Wärmemitteltemperatur kleiner als ein vorgegebener Wärmemitteltemperaturschwellenwert ist.

Hierbei kann das basierend auf der erforderlichen Wärmeleistung berechnete Bremsmoment in Abhängigkeit von einer (jeweiligen) aktuellen Drehzahl eines jeweiligen Antriebsrads 206 des Fahrzeugs 200 berechnet werden, das berechnete Bremsmoment durch die Übersetzung des Getriebes 214 dividiert und mit der anhand der Stellung des Gaspedals 205 bestimmten Drehmomentanforderung des Fahrers zusammenaddiert werden, um das Drehmoment zu erhalten, welches durch den elektrischen Antriebsmotor 210 erzeugt werden soll. Wenn das Fahrzeug 200 die Bremse 208 und mehrere der zumindest einen weiteren Bremse 201 aufweist, kann das berechnete Bremsmoment durch die Summe aus der Anzahl der Bremse(n) 208 und der Anzahl der weiteren Bremsen 201 dividiert und das Ergebnis in jeder der Bremsen 201, 208 realisiert werden. Wenn beispielsweise eine der zumindest einen weiteren Bremse 201 an einem Antriebsrad 206 auf der linken Seite des Fahrzeugs 200 und eine andere der zumindest einen weiteren Bremse 201 an einem Antriebsrad 206 der rechten Seite des Fahrzeugs 200 vorgesehen sind, wird das berechnete Bremsmoment in der (einen) Bremse 208 und den beiden weiteren Bremsen 201 zu je einem Drittel realisiert.

Die Steuereinheit 110 ist insbesondere dazu eingerichtet, eine aktuelle (Gesamt-)Bremsleistung der Bremse 208 und/oder der zumindest einen weiteren Bremse 201 zu ermitteln, und eine Fördermenge des Kühlmittels 305 durch die Kühlmittelpumpe 301 in Abhängigkeit von der aktuellen Gesamt-)Bremsleistung der Bremse 208 und/oder der zumindest einen weiteren Bremse 201 einzustellen.

Der Eingangstemperatursensor 701 ist dazu eingerichtet, eine Eingangstemperatur des Kühlmittels stromaufwärts der Bremse 208 und/oder der weiteren Bremse 201 zu erfassen, und der Ausgangstemperatursensor 702 ist dazu eingerichtet, eine Ausgangstemperatur des Kühlmittels stromabwärts der Bremse 208 und/oder der zumindest einen weiteren 201 Bremse zu erfassen. Die Steuereinheit 110 ist dazu eingerichtet, wenn eine Differenz zwischen der Ausgangstemperatur und der Eingangstemperatur einen vorgegebenen Differenztemperaturschwellenwert überschreitet, die Fördermenge des Kühlmittels durch die Kühlmittelpumpe 301 in Abhängigkeit von der aktuellen Bremsleistung und einer Differenz zwischen der Differenz zwischen der Ausgangstemperatur und der Eingangstemperatur und dem vorgegebenen Differenztemperaturschwellenwert einzustellen.

Das Thermomanagementsystem 100 weist ferner einen weiteren Wärmetauscher 405, insbesondere Radiator, zur Abgabe von Wärme an eine Umgebung des Fahrzeugs 200 auf, wobei durch das Mehrwegeventil 123 eine Menge zu dem weiteren Wärmetauscher 405 geförderten Wärmemittels einstellbar ist. Hierbei ist die Steuereinheit 110 dazu eingerichtet, wenn die Wärmemitteltemperatur größer als der vorgegebene Wärmemitteltemperaturschwellenwert ist, das Mehrwegeventil 123 derart anzusteuern, dass das Wärmemittel zu dem weiteren Wärmetauscher 405 gefördert wird, und bei dem Bremsvorgang den Generatormodus des elektrischen Antriebsmotors 210 einzustellen.

Die Steuereinheit 110 ist insbesondere dazu eingerichtet, die Bremse 208 und/oder die zumindest eine weitere Bremse 201 anzusteuern, um das Fahrzeug 200 durch Betätigung der Bremse 208 und/oder der zumindest einen weiteren Bremse 201 zusätzlich abzubremsen, wenn die Wärmemitteltemperatur größer als der vorgegebene Wärmemitteltemperaturschwellenwert ist und ein für den Bremsvorgang gefordertes Bremsmoment größer als ein durch den Generatormodus während des Bremsvorgangs erzeugbares Bremsmoment oder ein Bremsmoment ist, welches bei dauerhafter Erzeugung durch den Generatormodus zu einer Überhitzung des elektrischen Antriebsmotors 210 führen würde.

Das Thermomanagementsystem 100, insbesondere der Kühlmittelkreislauf 300, weist ferner einen Kühlmitteltemperatursensor 701, 702, welcher dazu eingerichtet ist, eine Temperatur des Kühlmittels 305 zu erfassen, und zumindest eine Bypassleitung 308 mit zumindest einem Ventil 307, insbesondere Absperr- oder Drosselventil, auf, wobei die zumindest eine Bypassleitung 308 parallel zu dem Wärmeübertrager 600 (nicht gezeigt) und/oder einem Kühlmittelfilter 303 (in Fig. 4 veranschaulicht), insbesondere Ölfilter, geschaltet ist, und die Steuereinheit 110 dazu eingerichtet ist, das zumindest eine Ventil 307 anzusteuern, um zumindest einen Anteil des Kühlmittels 305 parallel zu dem Wärmeübertrager 600 und/oder parallel zu dem Kühlmittelfilter 303 durch die Bypassleitung 308 zu fördern, wenn die Temperatur des Kühlmittels 305 kleiner als ein vorgegebener Kühlmitteltemperaturschwellenwert ist.

Das Thermomanagementsystem 100 weist ferner ein Kühlmittelkreislauf-Mehrwegeventil 302 auf, durch welches ein Verhältnis zwischen einer zur Kühlung der Bremse 208 und/oder der weiteren Bremse 201 verwendeten Kühlmittelmenge und einer zur Kühlung des Rotors 211 und/oder des Getriebes 214 verwendeten Kühlmittelmenge einstellbar ist, wobei die zumindest eine Temperaturerfassungseinrichtung 703 dazu eingerichtet ist, eine Temperatur des Rotors 211 und/oder einer Temperatur des Getriebes 214 zu erfassen.

Hierbei ist die Steuereinheit 110 dazu eingerichtet ist, die Fördermenge des Kühlmittels 305 durch die Kühlmittelpumpe 301 zusätzlich in Abhängigkeit von der Temperatur des Rotors 211 und/oder der Temperatur des Getriebes 214 einzustellen, und das Verhältnis zwischen der zur Kühlung der Bremse 208 und/oder der zumindest einen weiteren Bremse 201 verwendeten Kühlmittelmenge und der zur Kühlung des Rotors 211 und/oder des Getriebes 214 verwendeten Kühlmittelmenge basierend auf der Temperatur des Rotors 211 und/oder der Temperatur des Getriebes 214 und der Differenz zwischen der Differenz zwischen der Ausgangstemperatur und der Eingangstemperatur und dem vorgegebenen Differenztemperaturschwellenwert einzustellen.

Das Thermomanagementsystem 100 weist ferner einen Kühlkreislauf 800, insbesondere einer Klimaanlage des Fahrzeugs 200, mit einem Verdampfer 801 zur Kühlung des Innenraums des Fahrzeugs 200, Kondensatoren 802A, 802B, Expansionsventilen 805, 806 und 807, und einem Kompressor 803 zum Fördern eines weiteren Wärmemittels in dem Kühlkreislauf 800, und einen weiteren Wärmeübertrager 900 zum Austausch von Wärme zwischen dem Wärmemittel in dem Wärmemittelkreislauf 400 und dem weiteren Wärmemittel in dem Kühlkreislauf 800 auf.

Hierbei kann, wie in Fig. 2 veranschaulicht, das Wärmemittel des Wärmemittelkreislaufs 400 durch die Wärmemittelpumpe 403 ebenfalls zu dem Kondensator 802A gefördert werden.

### Bezugszeichenliste

- 100: Thermomanagementsystem
- 110: Steuereinheit
- 120, 121, 122: Mehrwegeventil
- 200: Fahrzeug
- 201: weitere Bremse
- 202: Batterie
- 203: Leistungselektronik
- 204: Ladegerät
- 205: Gaspedal
- 206: Antriebsrad
- 207: Kopplungs-/Entkopplungseinheit
- 208: Bremse
- 209: Differential
- 210: elektrischer Antriebsmotor
- 211: Rotor des elektrischen Antriebsmotors
- 212: Komponente des elektrischen Antriebsmotors
- 213: Wärmetauscher
- 214: Getriebe
- 215: Rotorwelle
- 216: Antriebswelle
- 300: Kühlmittelkreislauf
- 301: Kühlmittelpumpe
- 302: Kühlmittelkreislauf-Mehrwegeventil
- 303: Kühlmittelfilter
- 304: Kühlmittelwanne
- 305: Kühlmittel
- 306: Ansaugleitung
- 307: Ventil
- 308: Bypassleitung
- 400: Wärmemittelkreislauf
- 401, 402, 403: Wärmemittelpumpe
- 405: weiterer Wärmetauscher
- 600: Wärmeüberträger
- 700: Temperaturerfassungseinheit
- 701: Eingangstemperatursensor
- 702: Ausgangstemperatursensor
- 703: Temperaturerfassungseinrichtung
- 800: Kühlkreislauf
- 801: Verdampfer
- 802A, 802B: Kondensator
- 803: Kompressor
- 804, 805, 806, 807: Expansionsventil
- 900: weiterer Wärmeübertrager

## Patentansprüche

1. Thermomanagementsystem (100) für ein Fahrzeug (200), aufweisend
einen Kühlmittelkreislauf (300) mit einer Kühlmittelpumpe (301) zum Fördern eines Kühlmittels (305) in dem Kühlmittelkreislauf (300) zur Kühlung einer Bremse (208), insbesondere Lamellenbremse, des Fahrzeugs (200),
und weiter aufweisend
einen Wärmemittelkreislauf (400) mit zumindest einer Wärmemittelpumpe (401, 402, 403) zum Fördern eines Wärmemittels in dem Wärmemittelkreislauf (400) zur Kühlung und/oder Erwärmung einer Komponente (212), insbesondere eines Stators, eines elektrischen Antriebsmotors (210) des Fahrzeugs (200), **gekennzeichnet, durch**:
einen Wärmeübertrager (600) zum Austausch von Wärme zwischen dem Kühlmittel (305) in dem Kühlmittelkreislauf (300) und dem Wärmemittel in dem Wärmemittelkreislauf (400),
eine Kopplungs-/Entkopplungseinheit (207), die dazu eingerichtet ist, in einer Kopplungsstellung eine Drehung eines Rotors (211) des elektrischen Antriebsmotors (210) und eine Drehung zumindest eines Antriebsrads (206) des Fahrzeugs (200) zu koppeln und in einer Entkopplungsstellung die Drehung des Rotors (211) und die Drehung des zumindest einen Antriebsrads (206) zu entkoppeln, und
eine Steuereinheit (110), die dazu eingerichtet ist, bei einem Stillstand des Fahrzeugs (200) zu veranlassen, dass sich die Kopplungs-/Entkopplungseinheit (207) in der Entkopplungsstellung befindet, den elektrischen Antriebsmotor (210) zu veranlassen, dass der Rotor (211) gedreht wird, und die Bremse (208) zu veranlassen die Drehung des Rotors (211) zu bremsen.

2. Thermomanagementsystem (100) nach Anspruch 1, wobei die Bremse (208) zwischen der Kopplungs-/Entkopplungseinheit (207) und dem Rotor (211) angeordnet ist.

3. Thermomanagementsystem (100) nach einem der vorstehenden Ansprüche, bei dem die Kopplungs-/Entkopplungseinheit (207) zwischen einer Rotorwelle (215) des Rotors (211) und einem Getriebe (214), insbesondere Reduktionsgetriebe, des Fahrzeugs (200), oder zwischen dem Getriebe (214) und einem Differential (209) des Fahrzeugs (200) angeordnet ist.

4. Thermomanagementsystem (100) nach einem der vorstehenden Ansprüche, ferner aufweisend zumindest eine Temperaturerfassungseinheit (700), die dazu eingerichtet ist, eine Innenraumtemperatur eines Innenraums des Fahrzeugs (200) und/oder eine Batterietemperatur der Batterie (202) zu erfassen, wobei die Steuereinheit (110) dazu eingerichtet ist, bei dem Stillstand des Fahrzeugs (200) zu veranlassen, dass sich die Kopplungs-/Entkopplungseinheit (207) in der Entkopplungsstellung befindet, den elektrischen Antriebsmotor (210) zu veranlassen, dass der Rotor (211) gedreht wird, und die Bremse (208) zu veranlassen die Drehung des Rotors (211) zu bremsen, wenn die Batterietemperatur kleiner als ein vorgegebener Batterietemperaturschwellenwert ist und/oder wenn die Innenraumtemperatur kleiner als ein vorgegebener Innenraumtemperaturschwellenwert ist.

5. Thermomanagementsystem (100) nach einem der vorstehenden Ansprüche, bei dem der Kühlmittelkreislauf (300) mit der Kühlmittelpumpe (301) zum Fördern des Kühlmittels (305) in dem Kühlmittelkreislauf (300) zur Kühlung zumindest einer weiteren Bremse (201), insbesondere weiteren Lamellenbremse, des Fahrzeugs (200) und/oder des Rotors (211) und/oder des Getriebes (214) eingerichtet ist, wobei die zumindest eine weitere Bremse (201) dazu eingerichtet ist, die Drehung des zumindest einen Antriebsrads (206) zu bremsen, und zwischen der Kopplungs-/Entkopplungseinheit (207) und dem zumindest einen Antriebsrad (206) angeordnet ist.

6. Thermomanagementsystem (100) nach Anspruch 4 und einem der Ansprüche 1 bis 3 oder 5, ferner aufweisend zumindest ein Mehrwegeventil (120, 121, 122), durch welches eine Menge zu der Batterie (202) geförderten Wärmemittels und/oder eine Menge zu der Leistungselektronik (203) geförderten Wärmemittels und/oder eine Menge zu dem Ladegerät (204) geförderten Wärmemittels und/oder eine Menge zu der Komponente (212) des elektrischen Antriebsmotors (210) des Fahrzeugs (200) geförderten Wärmemittels und/oder eine Menge zu dem Wärmetauscher (213) geförderten Wärmemittels einstellbar ist, und die Steuereinheit (110) dazu eingerichtet ist, das zumindest eine Mehrwegeventil (121) derart anzusteuern, dass das Wärmemittel zu der Batterie (202) gefördert wird, wenn die Batterietemperatur kleiner als der vorgegebene Batterietemperaturschwellenwert ist, und/oder das zumindest eine Mehrwegeventil (122) derart anzusteuern, dass das Wärmemittel zu dem Wärmetauscher (213) gefördert wird, wenn die Innenraumtemperatur kleiner als der vorgegebene Innenraumtemperaturschwellenwert ist.

7. Thermomanagementsystem (100) nach Anspruch 6, bei dem die Steuereinheit (110) dazu eingerichtet ist, bei einem Bremsvorgang des Fahrzeugs (200) die Bremse (208) und/oder die zumindest eine weitere Bremse (201) anzusteuern, um das Fahrzeug (200) durch Betätigung der Bremse (201) und/oder der zumindest einen weiteren Bremse (201) abzubremsen, wenn die Batterietemperatur kleiner als der vorgegebene Batterietemperaturschwellenwert ist und/oder die Innenraumtemperatur kleiner als der vorgegebene Innenraumtemperaturschwellenwert ist.

8. Thermomanagementsystem (100) nach Anspruch 7, bei dem der elektrische Antriebsmotor (210) in einem Elektromotormodus und in einem Generatormodus, einstellbar durch die Steuereinheit (110), betreibbar ist, und die Steuereinheit (110) dazu eingerichtet ist, bei dem Bremsvorgang des Fahrzeugs (200) die Bremse (208) und/oder die zumindest eine weitere Bremse (201) anzusteuern, um das Fahrzeug (200) durch Betätigung der Bremse (208) und/oder der zumindest einen weiteren Bremse (201) abzubremsen, und den Elektromotormodus des elektrischen Antriebsmotors (210) einzustellen, wenn die Batterietemperatur kleiner als der vorgegebene Batterietemperaturschwellenwert ist und/oder die Innenraumtemperatur kleiner als der vorgegebene Innenraumtemperaturschwellenwert ist.

9. Thermomanagementsystem (100) nach Anspruch 8, bei dem die zumindest eine Temperaturerfassungseinheit (700) ferner dazu eingerichtet ist, eine Wärmemitteltemperatur des Wärmemittels zu erfassen, die Steuereinheit (110) dazu eingerichtet ist, eine erforderliche Wärmeleistung zum Erwärmen der Batterie (202) und/oder des Innenraums des Fahrzeugs (200) zu ermitteln, eine Stellung eines Gaspedals (205) des Fahrzeugs (200) zu erfassen, anhand der Stellung des Gaspedals (205) eine Drehmomentanforderung an den elektrischen Antriebsmotor (210) zu bestimmen, die Bremse (208) und/oder die zumindest eine weitere Bremse (201) derart anzusteuern, dass diese einen Bremsvorgang mit einem vorgegebenen, basierend auf der erforderlichen Wärmeleistung berechneten, Bremsmoment durchführt bzw. durchführen, und den elektrischen Antriebsmotor (210) derart anzusteuern, dass dieser ein Drehmoment erzeugt, welches auf der Drehmomentanforderung und dem Bremsmoment basiert, wenn die Wärmemitteltemperatur kleiner als ein vorgegebener Wärmemitteltemperaturschwellenwert ist.

10. Thermomanagementsystem (100) nach Anspruch 9, bei dem die Steuereinheit (110) dazu eingerichtet ist, eine aktuelle Bremsleistung der Bremse (208) und/oder der zumindest einen weiteren Bremse (201) zu ermitteln, und eine Fördermenge des Kühlmittels (305) durch die Kühlmittelpumpe (301) in Abhängigkeit von der aktuellen Bremsleistung der Bremse (208) und/oder der zumindest einen weiteren Bremse (201) einzustellen.

11. Thermomanagementsystem (100) nach Anspruch 10, ferner aufweisend einen weiteren Wärmetauscher (405) zur Abgabe von Wärme an eine Umgebung des Fahrzeugs (200), wobei durch das zumindest eine Mehrwegeventil (123) eine Menge zu dem weiteren Wärmetauscher (405) geförderten Wärmemittels einstellbar ist, und die Steuereinheit (110) dazu eingerichtet ist, wenn die Wärmemitteltemperatur größer als der vorgegebene Wärmemitteltemperaturschwellenwert ist, das zumindest eine Mehrwegeventil (123) derart anzusteuern, dass das Wärmemittel zu dem weiteren Wärmetauscher (405) gefördert wird, und bei dem Bremsvorgang den Generatormodus des elektrischen Antriebsmotors (210) einzustellen.

12. Thermomanagementsystem (100) nach Anspruch 11, bei dem die Steuereinheit (110) dazu eingerichtet ist, die Bremse (208) und/oder die zumindest eine weitere Bremse (201) anzusteuern, um das Fahrzeug (200) durch Betätigung der Bremse (208) und/oder der zumindest einen weiteren Bremse (201) zusätzlich abzubremsen, wenn die Wärmemitteltemperatur größer als der vorgegebene Wärmemitteltemperaturschwellenwert ist und ein für den Bremsvorgang gefordertes Bremsmoment größer als ein durch den Generatormodus während des Bremsvorgangs erzeugbares Bremsmoment ist.

13. Thermomanagementsystem (100) nach einem der vorstehenden Ansprüche, ferner aufweisend einen Kühlmitteltemperatursensor (701, 702), welcher dazu eingerichtet ist, eine Temperatur des Kühlmittels (305) zu erfassen, und zumindest eine Bypassleitung (308) mit zumindest einem Ventil (307), insbesondere Absperr- oder Drosselventil, wobei die zumindest eine Bypassleitung (308) parallel zu dem Wärmeübertrager (600) und/oder einem Kühlmittelfilter (303) geschaltet ist, und die Steuereinheit (110) dazu eingerichtet ist, das zumindest eine Ventil (307) anzusteuern, um zumindest einen Anteil des Kühlmittels (305) parallel zu dem Wärmeübertrager (600) und/oder parallel zu dem Kühlmittelfilter (303) durch die Bypassleitung (308) zu fördern, wenn die Temperatur des Kühlmittels (305) kleiner als ein vorgegebener Kühlmitteltemperaturschwellenwert ist.

14. Thermomanagementsystem (100) nach einem der vorstehenden Ansprüche,
wobei der Wärmemittelkreislauf (400) mit der zumindest einen Wärmemittelpumpe (401, 402, 403) zum Fördern des Wärmemittels in dem Wärmemittelkreislauf (400) zur Kühlung und/oder Erwärmung einer Batterie (202) und/oder einer Leistungselektronik (203) und/oder eines Ladegeräts (204) und/oder zur Erwärmung eines Innenraums des Fahrzeugs (200), insbesondere durch einen Wärmetauscher (213), eingerichtet ist und/oder
das Thermomanagementsystem (100) ferner aufweist:
einen Kühlkreislauf (800) mit einem Verdampfer (801) zur Kühlung des Innenraums des Fahrzeugs (200), einem Kondensator (802A, 802B) und einem Kompressor (803) zum Fördern eines weiteren Wärmemittels in dem Kühlkreislauf (800), und
einen weiteren Wärmeübertrager (900) zum Austausch von Wärme zwischen dem Wärmemittel in dem Wärmemittelkreislauf (400) und dem weiteren Wärmemittel in dem Kühlkreislauf (800).

15. Fahrzeug (200), insbesondere Kraftfahrzeug, aufweisend ein Thermomanagementsystem (100) nach einem der vorstehenden Ansprüche.

## Claims

1. Thermal management system (100) for a vehicle (200), comprising
a coolant circuit (300) with a coolant pump (301) for conveying a coolant (305) in the coolant circuit (300) for cooling a brake (208), in particular multi-disc brake, of the vehicle (200),
and further comprising
a heating medium circuit (400) having at least one heating medium pump (401, 402, 403) for conveying a heating medium in the heating medium circuit (400) for cooling and/or heating a component (212), in particular a stator, of an electric drive motor (210) of the vehicle (200), **characterized by**:
a heat exchanger (600) for the exchange of heat between the coolant (305) in the coolant circuit (300) and the heating medium in the heating medium circuit (400),
a coupling/decoupling unit (207) which is designed, in a coupling position, to couple a rotation of a rotor (211) of the electric drive motor (210) and a rotation of at least one drive wheel (206) of the vehicle (200) and, in a decoupling position, to decouple the rotation of the rotor (211) and the rotation of the at least one drive wheel (206), and
a controller (110) which is designed to cause the coupling/decoupling unit (207) to be in the decoupling position when the vehicle (200) is at a standstill, to cause the electric drive motor (210) to rotate the rotor (211), and to cause the brake (208) to brake the rotation of the rotor (211).

2. Thermal management system (100) according to Claim 1, wherein the brake (208) is arranged between the coupling/decoupling unit (207) and the rotor (211).

3. Thermal management system (100) according to either of the preceding claims, in which the coupling/decoupling unit (207) is arranged between a rotor shaft (215) of the rotor (211) and a gearbox (214), in particular reduction gear, of the vehicle (200), or between the gearbox (214) and a differential (209) of the vehicle (200).

4. Thermal management system (100) according to one of the preceding claims, further comprising at least one temperature sensing unit (700) which is designed to detect an interior temperature of an interior of the vehicle (200) and/or a battery temperature of the battery (202), wherein the controller (110) is designed to cause the coupling/decoupling unit (207) to be in the decoupling position when the vehicle (200) is at a standstill, to cause the electric drive motor (210) to rotate the rotor (211), and to cause the brake (208) to brake the rotation of the rotor (211), if the battery temperature is lower than a specified battery temperature threshold and/or if the interior temperature is lower than a specified interior temperature threshold.

5. Thermal management system (100) according to one of the preceding claims, in which the coolant circuit (300) is designed, with the coolant pump (301) for conveying the coolant (305) in the coolant circuit (300), for cooling at least one further brake (201), in particular further multi-disc brake, of the vehicle (200) and/or the rotor (211) and/or the gearbox (214), wherein the at least one further brake (201) is designed to brake the rotation of the at least one drive wheel (206), and is arranged between the coupling/decoupling unit (207) and the at least one drive wheel (206).

6. Thermal management system (100) according to Claim 4 and one of Claims 1 to 3 or 5, further comprising at least one multi-way valve (120, 121, 122), by which a quantity of heating medium conveyed to the battery (202) and/or a quantity of heating medium conveyed to the electronic power system (203) and/or a quantity of heating medium conveyed to the charger (204) and/or a quantity of heating medium conveyed to the component (212) of the electric drive motor (210) of the vehicle (200) and/or a quantity of heating medium conveyed to the heat exchanger (213) are/is adjustable, and the controller (110) is designed to actuate the at least one multi-way valve (121) in such a way that the heating medium is conveyed to the battery (202) if the battery temperature is lower than the specified battery temperature threshold, and/or to actuate the at least one multi-way valve (122) in such a way that the heating medium is conveyed to the heat exchanger (213) if the interior temperature is lower than the specified interior temperature threshold.

7. Thermal management system (100) according to Claim 6, in which the controller (110) is designed to actuate the brake (208) and/or the at least one further brake (201) during a braking operation of the vehicle (200) in order to brake the vehicle (200) by activating the brake (201) and/or the at least one further brake (201), if the battery temperature is lower than the specified battery temperature threshold and/or the interior temperature is lower than the specified interior temperature threshold.

8. Thermal management system (100) according to Claim 7, in which the electric drive motor (210) is operable in an electric motor mode and in a generator mode, adjustable by the controller (110), and the controller (110) is designed to actuate the brake (208) and/or the at least one further brake (201) during the braking operation of the vehicle (200) in order to brake the vehicle (200) by activating the brake (208) and/or the at least one further brake (201), and to set the electric motor mode of the electric drive motor (210) if the battery temperature is lower than the specified battery temperature threshold and/or the interior temperature is lower than the specified interior temperature threshold.

9. Thermal management system (100) according to Claim 8, in which the at least one temperature sensing unit (700) is further designed to sense a heating medium temperature of the heating medium, the controller (110) is designed to determine a required heat output for heating the battery (202) and/or the interior of the vehicle (200), to sense a position of an accelerator pedal (205) of the vehicle (200), to determine a torque requirement for the electric drive motor (210) based on the position of the accelerator pedal (205), to actuate the brake (208) and/or the at least one further brake (201) in such a way that it/they performs/perform a braking operation with a specified braking torque calculated on the basis of the required heat output, and to actuate the electric drive motor (210) in such a way that it generates a torque based on the torque requirement and the braking torque if the heating medium temperature is lower than a specified heating medium temperature threshold.

10. Thermal management system (100) according to Claim 9, in which the controller (110) is designed to determine a current braking power of the brake (208) and/or of the at least one further brake (201), and to set a flow rate of the coolant (305) through the coolant pump (301) in a manner dependent on the current braking power of the brake (208) and/or the at least one further brake (201).

11. Thermal management system (100) according to Claim 10, further comprising a further heat exchanger (405) for dissipating heat to a surrounding area of the vehicle (200), wherein a quantity of heating medium conveyed to the further heat exchanger (405) can be set by means of the at least one multi-way valve (123), and the controller (110) is designed to actuate the at least one multi-way valve (123) if the heating medium temperature is greater than the specified heating medium temperature threshold, in such a way that the heating medium is conveyed to the further heat exchanger (405), and to set the generator mode of the electric drive motor (210) during the braking operation.

12. Thermal management system (100) according to Claim 11, in which the controller (110) is designed to actuate the brake (208) and/or the at least one further brake (201) in order to additionally brake the vehicle (200) by activating the brake (208) and/or the at least one further brake (201), if the heating medium temperature is greater than the specified heating medium temperature threshold and a braking torque required for the braking operation is greater than a braking torque which can be generated by the generator mode during the braking operation.

13. Thermal management system (100) according to one of the preceding claims, further comprising a coolant temperature sensor (701, 702) which is designed to sense a temperature of the coolant (305), and at least one bypass line (308) with at least one valve (307), in particular shut-off or throttle valve, wherein the at least one bypass line (308) is connected in parallel to the heat exchanger (600) and/or a coolant filter (303), and the controller (110) is designed to actuate the at least one valve (307) in order to convey at least a portion of the coolant (305) parallel to the heat exchanger (600) and/or parallel to the coolant filter (303) through the bypass line (308) if the temperature of the coolant (305) is lower than a specified coolant temperature threshold.

14. Thermal management system (100) according to one of the preceding claims,
wherein the heating medium circuit (400) is arranged with the at least one heating medium pump (401, 402, 403) for conveying the heating medium in the heating medium circuit (400) for cooling and/or heating a battery (202) and/or an electronic power system (203) and/or a charger (204) and/or for heating an interior of the vehicle (200), in particular by a heat exchanger (213),
and/or
the thermal management system (100) further comprises:
a cooling circuit (800) comprising an evaporator (801) for cooling the interior of the vehicle (200), a condenser (802A, 802B) and a compressor (803) for conveying a further heating medium in the cooling circuit (800), and
a further heat exchanger (900) for the exchange of heat between the heating medium in the heating medium circuit (400) and the further heating medium in the cooling circuit (800).

15. Vehicle (200), in particular motor vehicle, comprising a thermal management system (100) according to one of the preceding claims.

## Revendications

1. Système de gestion thermique (100) d'un véhicule (200), comportant
un circuit de liquide de refroidissement (300) avec une pompe à liquide de refroidissement (301) destinée à refouler un liquide de refroidissement (305) dans le circuit de liquide de refroidissement (300) pour refroidir un frein (208), en particulier un frein multidisque, du véhicule (200),
et comportant par ailleurs
un circuit de fluide caloporteur (400) avec au moins une pompe à fluide caloporteur (401, 402, 403) destiné à refouler un fluide caloporteur dans le circuit de fluide caloporteur (400) pour refroidir et/ou chauffer un composant (212), en particulier un stator, d'un moteur d'entraînement électrique (210) du véhicule (200),
**caractérisé par** :
un échangeur de chaleur (600) destiné à échanger de la chaleur entre le liquide de refroidissement (305) dans le circuit de liquide de refroidissement (300) et le fluide caloporteur dans le circuit de fluide caloporteur (400),
une unité de couplage/découplage (207), qui est mise au point pour coupler une rotation d'un rotor (211) du moteur d'entraînement électrique (210) et une rotation d'au moins une roue d'entraînement (206) du véhicule (200) dans une position de couplage et pour découpler la rotation du rotor (211) et la rotation de l'au moins une roue d'entraînement (206) dans une position de découplage, et
une unité de commande (110), qui est mise au point de manière à permettre, lorsque le véhicule (200) est à l'arrêt, que l'unité de couplage/découplage (207) se trouve en position de découplage, de manière à permettre au moteur d'entraînement électrique (210) de faire tourner le rotor (211) et à permettre au frein (208) de freiner la rotation du rotor (211).

2. Système de gestion thermique (100) selon la revendication 1, le frein (208) étant disposé entre l'unité de couplage/découplage (207) et le rotor (211).

3. Système de gestion thermique (100) selon l'une des revendications précédentes, l'unité de couplage/découplage (207) étant disposée entre un arbre (215) de rotor du rotor (211) et une boîte de vitesses (214), en particulier une boîte de vitesses réductrice, du véhicule (200), ou entre la boîte de vitesses (214) et un différentiel (209) du véhicule (200).

4. Système de gestion thermique (100) selon l'une des revendications précédentes, comportant en outre au moins une unité de détection de température (700), qui est mise au point pour détecter une température intérieure d'un habitacle du véhicule (200) et/ou une température de batterie de la batterie (202), l'unité de commande (110) étant mise au point de manière à permettre, lorsque le véhicule (200) est à l'arrêt, que l'unité de couplage/découplage (207) se trouve dans la position de découplage, de manière à permettre au moteur d'entraînement électrique (210) de faire tourner le rotor (211), et à permettre au frein (208) de freiner la rotation du rotor (211), lorsque la température de batterie est inférieure à une valeur de seuil de température de batterie prédéfinie et/ou lorsque la température intérieure est inférieure à une valeur de seuil de température intérieure prédéfinie.

5. Système de gestion thermique (100) selon l'une des revendications précédentes, dans lequel le circuit de liquide de refroidissement (300) avec la pompe à liquide de refroidissement (301) est mis au point pour refouler le liquide de refroidissement (305) dans le circuit de liquide de refroidissement (300) pour refroidir au moins un autre frein (201), en particulier un autre frein multidisque, du véhicule (200) et/ou du rotor (211) et/ou de la boîte de vitesses (214), l'au moins un autre frein (201) étant mis au point pour freiner la rotation de l'au moins une roue d'entraînement (206), et étant disposé entre l'unité de couplage/découplage (207) et l'au moins une roue d'entraînement (206).

6. Système de gestion thermique (100) selon la revendication 4 et l'une des revendications 1 à 3 ou 5, comportant en outre au moins une vanne à voies multiples (120, 121, 122), qui permet de régler une quantité de fluide caloporteur refoulée vers la batterie (202) et/ou une quantité de fluide caloporteur refoulée vers l'électronique de puissance (203) et/ou une quantité de fluide caloporteur refoulée vers l'appareil de charge (204) et/ou une quantité de fluide caloporteur refoulée vers le composant (212) du moteur d'entraînement électrique (210) du véhicule (200) et/ou une quantité de fluide caloporteur refoulée vers l'échangeur de chaleur (213), et l'unité de commande (110) étant mise au point pour piloter l'au moins une vanne à voies multiples (121) de telle manière que le fluide caloporteur est refoulé vers la batterie (202) lorsque la température de batterie est inférieure à la valeur de seuil de température de batterie prédéfinie, et/ou pour piloter l'au moins une vanne à voies multiples (122) de telle manière que le fluide caloporteur est refoulé vers l'échangeur de chaleur (213) lorsque la température intérieure est inférieure à la valeur de seuil de température intérieure prédéfinie.

7. Système de gestion thermique (100) selon la revendication 6, dans lequel l'unité de commande (110) est mise au point pour piloter le frein (208) et/ou l'au moins un autre frein (201) lors d'un processus de freinage du véhicule (200) pour ralentir le véhicule (200) en actionnant le frein (201) et/ou l'au moins un autre frein (201) lorsque la température de batterie est inférieure à la valeur de seuil de température de batterie prédéfinie et/ou lorsque la température intérieure est inférieure à la valeur de seuil de température intérieure prédéfinie.

8. Système de gestion thermique (100) selon la revendication 7, dans lequel le moteur d'entraînement électrique (210) pouvant être réglé par l'unité de commande (110) peut fonctionner dans un mode de moteur électrique et dans un mode de générateur, et l'unité de commande (110) est mise au point pour piloter le frein (208) et/ou l'au moins autre frein (201) lors du processus de freinage du véhicule (200) pour ralentir le véhicule (200) en actionnant le frein (208) et/ou l'au moins un autre frein (201), et pour régler le mode de moteur électrique du moteur d'entraînement électrique (210), lorsque la température de batterie est inférieure à la valeur de seuil de température de batterie prédéfinie et/ou lorsque la température intérieure est inférieure à la valeur de seuil de température intérieure prédéfinie.

9. Système de gestion thermique (100) selon la revendication 8, dans lequel l'au moins une unité de détection de température (700) est en outre mise au point pour détecter une température de fluide caloporteur du fluide caloporteur, l'unité de commande (110) est mise au point pour déterminer une puissance de chauffage requise pour chauffer la batterie (202) et/ou l'habitacle du véhicule (200), pour détecter une position d'une pédale d'accélérateur (205) du véhicule (200), pour déterminer une demande de couple de rotation au moteur d'entraînement électrique (210) à l'aide de la position de la pédale d'accélérateur (205), pour piloter le frein (208) et/ou l'au moins un autre frein (201) de telle manière que celui-ci ou ceux-ci exécute ou exécutent un processus de freinage avec un couple de freinage prédéfini calculé sur la base de la puissance thermique requise, et pour piloter le moteur d'entraînement électrique (210) de telle manière que celui-ci génère un couple de rotation qui est basé sur la demande de couple de rotation et le couple de freinage lorsque la température de fluide caloporteur est inférieure à une valeur de seuil de température de fluide caloporteur prédéfinie.

10. Système de gestion thermique (100) selon la revendication 9, dans lequel l'unité de commande (110) est mise au point pour déterminer une puissance de freinage actuelle du frein (208) et/ou de l'au moins un autre frein (201) et pour régler un débit du liquide de refroidissement (305) par la pompe à liquide de refroidissement (301) en fonction de la puissance de freinage actuelle du frein (208) et/ou de l'au moins un autre frein (201).

11. Système de gestion thermique (100) selon la revendication 10, comportant en outre un autre échangeur de chaleur (405) destiné à émettre de la chaleur vers un environnement du véhicule (200), une quantité de fluide caloporteur refoulée vers l'autre échangeur de chaleur (405) pouvant être réglée par l'au moins une vanne à voies multiples (123), et l'unité de commande (110) étant mise au point pour piloter, lorsque la température de fluide caloporteur est supérieure à la valeur de seuil de température de fluide caloporteur prédéfinie, l'au moins une vanne à voies multiples (123) de telle manière que le fluide caloporteur est refoulé vers l'autre échangeur de chaleur (405) et pour régler le mode de générateur du moteur d'entraînement électrique (210) lors du processus de freinage.

12. Système de gestion thermique (100) selon la revendication 11, dans lequel l'unité de commande (110) est mise au point pour piloter le frein (208) et/ou l'au moins un autre frein (201) pour ralentir en supplément le véhicule (200) par l'actionnement du frein (208) et/ou de l'au moins un autre frein (201) lorsque la température de fluide caloporteur est supérieure à la valeur de seuil de température de fluide caloporteur prédéfinie et qu'un couple de freinage requis pour le processus de freinage est supérieur à un couple de freinage pouvant être généré par le mode de générateur pendant le processus de freinage.

13. Système de gestion thermique (100) selon l'une des revendications précédentes, comportant en outre un capteur de température de liquide de refroidissement (701, 702), qui est mis au point pour détecter une température du liquide de refroidissement (305), et au moins une conduite de dérivation (308) avec au moins une vanne (307), en particulier une vanne d'arrêt ou d'étranglement, l'au moins une conduite de dérivation (308) étant branchée en parallèle à l'échangeur de chaleur (600) et/ou à un filtre (303) de liquide de refroidissement, et l'unité de commande (110) étant mise au point pour piloter l'au moins une vanne (307) pour refouler au moins une partie du liquide de refroidissement (305) à travers la conduite de dérivation (308) parallèlement à l'échangeur de chaleur (600) et/ou parallèlement au filtre (303) de liquide de refroidissement lorsque la température du liquide de refroidissement (305) est inférieure à une valeur de seuil de température de liquide de refroidissement prédéfinie.

14. Système de gestion thermique (100) selon l'une des revendications précédentes,
le circuit de fluide caloporteur (400) avec l'au moins une pompe à fluide caloporteur (401, 402, 403) étant mis au point pour refouler le fluide caloporteur dans le circuit de fluide caloporteur (400) pour refroidir et/ou chauffer une batterie (202) et/ou une électronique de puissance (203) et/ou un appareil de charge (204) et/ou pour chauffer un habitacle du véhicule (200), en particulier par un échangeur de chaleur (213)
et/ou
le système de gestion thermique (100) comportant en outre :
un circuit de refroidissement (800) avec un évaporateur (801) pour refroidir l'habitacle du véhicule (200), un condenseur (802A, 802B) et un compresseur (803) pour refouler un autre fluide caloporteur dans le circuit de refroidissement (800), et
un autre échangeur de chaleur (900) pour échanger de la chaleur entre le fluide caloporteur dans le circuit de fluide caloporteur (400) et l'autre fluide caloporteur dans le circuit de refroidissement (800).

15. Véhicule (200), en particulier véhicule à moteur, comportant un système de gestion thermique (100) selon l'une des revendications précédentes.
